Europäisches Patentamt

European Patent Office

Office européen des brevets

(11) Publication number: **0 068 714**
**B1**

# EUROPEAN PATENT SPECIFICATION

(45) Date of publication of patent specification: **30.10.85**

(51) Int. Cl.⁴: **B 29 C 35/16**

(21) Application number: **82303110.9**

(22) Date of filing: **15.06.82**

(54) **Thermal-forming processes.**

(30) Priority: **25.06.81 GB 8119545**

(43) Date of publication of application:
**05.01.83 Bulletin 83/01**

(45) Publication of the grant of the patent:
**30.10.85 Bulletin 85/44**

(84) Designated Contracting States:
**DE FR GB**

(56) References cited:
**CH-A- 562 680**
**DD-A- 103 189**
**DE-A-2 336 789**
**US-A-4 205 950**

(73) Proprietor: **BP Chemicals Limited**
**Belgrave House 76 Buckingham Palace Road**
**London, SW1W 0SU (GB)**

(72) Inventor: **Cann, John Michael**
**BP CHEMICALS LIMITED Hayes Road**
**Sully Penarth South Glamorgan, CF6 2YU (GB)**
Inventor: **Portingell, Graham Callend**
**BP CHEMICALS LIMITED Hayes Road**
**Sully Penarth South Glamorgan, CF6 2YU (GB)**
Inventor: **Williams, James Gordon**
**Chiltern Cottage North Road**
**Chesham Bois Amersham Buckingham (GB)**

(74) Representative: **Denbigh, Keith Warwick et al**
**c/o The British Petroleum Company plc Patents**
**Division Chertsey Road**
**Sunbury-on-Thames Middlesex, TW16 7LN (GB)**

Courier Press, Leamington Spa, England.

# Description

The present invention relates to a process for the thermal-forming of thermoplastic materials into useful products.

There are many well known processes for manufacturing useful products from thermoplastic raw materials. The majority of such processes, for example, injection moulding, extrusion, blow moulding, vacuum forming and calendering rely on the inherent physical property of thermoplastic materials to soften progressively and form mouldable or deformable melts as the temperature is raised and to revert to a relatively rigid (high modulus) condition at ambient temperatures. Throughout this specification such processes are referred to as 'thermal-forming' processes. Essentially these processes comprise heating a thermoplastic material to form a melt, deforming or moulding the melt to the desired shape, for example by casting or by the action of mechanical pressure or gas pressure, and finally cooling the shaped material so that it remains in the desired shape.

Processes for cooling the thermally-formed products from the melt temperature back to room temperature are time consuming and it is desirable to reduce the cooling time to a minimum to achieve high production rates. For example in many injection moulding techniques, the thermoplastic melt injected into the mould must be retained in the mould during at least part of the cooling cycle so that the product cools to a sufficient state of rigidity to retain its shape on removal from the mould. This means that the cooling process occupies a high percentage of the moulding cycle time. It is therefore desirable to use vigorous cooling techniques to reduce the cooling time to a minimum and thus to increase production rates. In most thermal-forming operations high rates of cooling of the products are achieved either by the direct application of a refrigerated fluid to the product or by cooling the mould or other tool surfaces used to deform the thermoplastic material into the desired shape. The more vigorous the cooling technique employed the more rapidly the product is cooled and the higher the production rate.

However, rapid cooling of the thermoplastic material from the melt temperature down to ambient temperatures frequently impairs the quality of the product. Rapid cooling of the thermoplastic melt induces high temperature gradients between the cooled surface and points remote from the surface. Parts of the melt close to the surface are rapidly cooled to an essentially rigid state while the interior parts are still relatively hot. When the hotter interior parts eventually cool, the thermal shrinkage which would normally accompany the cooling is inhibited by the relative rigidity of the first-cooled areas and this sets up mechanical stresses within the product. In general, the higher the cross-sectional area of the thermoplastic material in the product, the higher the internal shrinkage stress generated on cooling.

The existence of internal shrinkage stresses within the thermally-formed products is well recognised in the art and the magnitude of such stresses is known to be a function of, inter alia, the coefficient of the thermal expansion and the modulus (i.e. rigidity) of the thermoplastic material. These stresses in thermally-formed products may relax spontaneously over a period of time at rates governed by the viscoelastic properties of the thermoplastics employed. However, the presence of large internal stresses in the products can be highly undesirable and can lead to early mechanical failure of such products. It is known that the generation of internal shrinkage stresses in thermally-formed products can be inhibited by substantially reducing the overall rate of cooling from the melt temperature through to ambient temperature. However this results in considerable reduction in production rates. It is also known that thermal shrinkage stresses in thermoplastics products may be relaxed to some extent by subsequent heat treatment or annealing steps. Such additional steps are economically undesirable and furthermore can lead to distortion (warping) of the product.

It is an object of the present invention to provide a process for the thermal-forming of thermoplastic materials to give products which are relatively free from internal shrinkage stresses and wherein relatively high production rates are achieved. The invention is based on the fact that the greater part of the internal shrinkage stresses develop in a thermally-formed product as it cools from the melt temperature through a narrow "critical" temperature range which is a characteristic of the particular thermoplastic material in use. The "critical" temperature range for a particular thermoplastic material is readily determined by a known test procedure.

Accordingly the present invention provides a process for manufacturing a shaped thermoplastic product by thermally-forming a thermoplastic material and cooling the thermally-formed melt by heat-exchange means applied to a surface thereof characterised in that the cooling of the thermoplastic material comprises the following two sequential stages:

(1) rapidly cooling the thermoplastic melt until at least a surface thereof has cooled to, or below, an upper critical temperature $T_u$, whilst the thermoplastic material remote from the surface is still at a temperature above $T_u$,

(2) controlling the heat exchange means so that the temperature gradient between the surface thermoplastic material and the material remote from the surface is substantially reduced until substantially the whole of the thermoplastic material has fallen to a temperature not higher than a lower critical temperature $T_1$, wherein the upper and lower critical temperatures are determined by the VICAT method described in BS 2782, Part 1, Method 120A, 1976, $T_1$ being the temperature at which a 0.1 mm penetration is

achieved and $T_u$ being the temperature at which a 1 mm penetration is achieved.

Examples of thermoplastic materials that can be employed in the process of the present invention are high, medium and low density ethylene polymers and copolymers, polypropylene, polyvinylchloride, polystyrene, toughened polystyrene, acrylonitrile-polybutadienestyrene copolymers, polymethylmethacrylate, polyamide, polycarbonate and polysulphone. Preferred thermoplastics are those having a high thermal shrinkage and high modulus, e.g. high density polyethylene.

Examples of thermal-forming processes to which the present invention is applicable are injection moulding, injectiong-blow moulding, blow moulding, extrusion, vacuum forming, pressure forming and calendering.

The temperature at which thermoplastic materials are thermally-formed in the process of the present invention is dictated largely by the processing properties of the particular thermoplastic material and the particular thermal-forming process being used. However, the temperature will normally be at least 10 degrees Celsius higher than the defined upper critical temperature $(T_u)$ and will frequently be at least 50 degrees Celsius higher than $T_u$.

The heat-exchange means employed in the present invention comprises cooling means for performing the rapid cooling required in stage 1. For example, where the thermal forming process of the present invention is vacuum forming, injection moulding, or blow moulding, the cooling means may be, for example, ducting situated beneath the surface of the mould and adapted to carry cooling fluid for cooling the surface of the mould. In the case of, for example, extrusion or calendering, the cooling means may be, for example, a bath of cool fluid into which the extruded or calendered melt is passed. In stage 1 of the process of the present invention cooling is applied to a surface of the thermally-formed melt and the whole surface or a part thereof may be cooled.

When the surface of the melt has cooled to, or below the upper critical temperature $(T_u)$ heat exchange means are applied in stage 2 whilst the material remote from the surface is still at a temperature above $T_u$ to achieve the requisite reduction in the temperature gradient. Preferably the heat exchange means employed in stage 2 maintains the surface of the thermoplastic material at a temperature in a range between $T_u$ and $T_1$ until substantially all the thermoplastic material has fallen to a temperature within this range and then gradually reduces the surface temperature until the whole of the material has fallen to a temperature not higher than the lower critical temperature $T_1$.

The heat exchange means employed in stage 2, of the process of the present invention can comprise the same or similar means as those employed in stage 1, for example, fluid circulation means or a bath of fluid adapted to control the surface temperature of the thermoplastic material. For example, in a continuous extrusion process for manufacturing a continuous length of pipe in accordance with the present invention, the extruded pipe is rapidly cooled from the melt in stage 1 so that its surface temperature is at or below the upper critical temperature $(T_u)$ and the thermoplastic material remote from the surface is still at a temperature above $T_u$, and in stage 2 the pipe is preferably passed through a plurality of baths so that the temperature gradient between the surface thermoplastic material and material remote from the surface is substantially reduced as the temperature of the thermoplastic material remote from the surface cools through $T_u$ to $T_1$. When the thermoplastic material remote from the surface has cooled to $T_1$ the cooling process may be accelerated or allowed to proceed naturally as desired.

The reduction in the temperature gradient between the surface thermoplastic material and the material remote from the surface in stage 2 of the present invention reduces the tendency of the thermally-formed thermoplastic material to generate internal shrinkage stresses. The surface temperature of the thermally-formed thermoplastic is maintained in stage 2 within the range $T_u$ to $T_1$ for as long as is necessary to achieve the desired reduction in temperature gradient to reduce the generation of internal stresses. The surface of thermoplastic products having thick cross-sections will generally require longer periods of time within this temperature range to reduce the temperature gradient than products having relatively thin cross-sections to achieve a comparable freedom from internal shrinkage stresses.

After substantially all the thermally-formed thermoplastic material has cooled to the temperature $T_1$ it may be allowed to cool further naturally or may be caused to cool at any desired rate. Preferably the thermoplastic product is cooled rapidly to ambient temperature after substantially all the product has cooled to the temperature $T_1$.

In a preferred embodiment of the present invention, a mould suitable for use in the thermoforming process of the invention comprises a thin metal shell surrounding the cavity in which the moulding is formed, the face of the mould adapted to contact the thermoplastic material being in close thermal contact with channels for the circulation of a heat exchange fluid. Preferably the mould is provided with additional electrical heating elements. The mould may be contained within a robust steel casing but is separated therefrom by a mechanically strong thermally insulating material, e.g. a mineral cement.

## Claims

1. A process for manufacturing a shaped thermoplastic product by thermally-forming a thermoplastic material and cooling the thermally-formed melt by heat exchange means applied to a surface thereof, characterised in that the cooling of the thermoplastic material comprises the following two sequential stages:

(1) rapidly cooling the thermoplastics melt until at least a surface thereof has cooled to, or below, an upper critical temperature $T_u$, whilst the thermoplastic material remote from the surface is still at a temperature above $T_u$.

(2) controlling the heat exchange means so that the temperature gradient between the surface thermoplastic material and the material remote from the surface is substantially reduced until substantially the whole of the thermoplastic material has fallen to a temperature not higher than a lower critical temperature $T_1$, wherein the upper and lower critical temperatures are determined by the VICAT method, $T_1$ being the temperature at which a 0.1 mm penetration is achieved and $T_u$ being the temperature at which a 1 mm penetration is achieved.

2. A process as claimed in claim 1 wherein the thermoplastic material employed is high, medium or low density polyethylene, polypropylene, polyvinyl chloride, polystyrene, toughened polystyrene, acrylonitrile/butadiene/styrene copolymers, polymethylmethacrylate, polyamide, polysulphone or polycarbonate.

3. A process as claimed in claim 1 or 2 wherein the thermal-forming process is a moulding process.

4. A process as claimed in claim 3 wherein the moulding process is injection-moulding.

5. A process as claimed in claim 3 or 4 wherein the heat exchange means comprise ducting situated beneath the surface of the mould and adapted to carry a heat exchange fluid.

6. A process as claimed in any one of the preceding claims wherein the heat exchange means are applied in stage 2 to maintain the surface of the thermoplastic material at a temperature in the range between $T_u$ and $T_1$ until substantially all the thermoplastic material has fallen to a temperature within said range, and then gradually reduce the surface temperature until the whole of the material has fallen to a temperature not higher than $T_1$.

7. A process as claimed in claim 1 or 2 wherein the thermal-forming process is continuous extrusion, and the continuously extruding product is passed through a plurality of baths to achieve the reduction in temperature gradient in stage 2.

## Patentansprüche

1. Verfahren zum Herstellen eines geformten thermoplastischen Produkts durch Warmverformen eines thermoplastischen Materials und Kühlen der warmverformten Schmelze mit Hilfe eines auf einer Oberfläche derselben aufgebrachten Wärmeaustauschmittels, dadurch gekennzeichnet, daß das Kühlen des thermoplastischen Materials die nachfolgenden zwei Folgestufen umfaßt:

(1) Schnell-Kühlen der thermoplastischen Schmelze, bis mindestens eines Oberfläche derselben auf oder unter eine obere kritische Temperatur $T_u$ abgekühlt ist, während das von der Oberfläche entfernt gelegene thermoplastische Material noch auf einer Temperatur oberhalb $T_u$ liegt,

(2) Regeln der Wärmeaustauschmittel so, daß der Temperaturgradient zwischen der Oberfläche des thermoplastischen Materials und dem von der Oberfläche entfernt gelegenen Material wesentlichen reduziert wird, bis im wesentlichen die Gesamtheit des thermoplastischen Materials auf eine Temperatur nicht höher als eine untere kritische Temperatur $T_1$ abgesenkt ist, wobei die obere und die untere kritische Temperatur durch das VICAT-Verfahren bestimmt sind, $T_1$ die Temperatur ist, bei der Eine 0,1 mm Eindrigung erreicht wird, $T_u$ die Tmperatur ist, bei der eine 1 mm Eindringung erreicht wird.

2. Verfahren nach Anspruch 1, wobei das verwendete thermoplastische Material Polyethylen hoher, mittlerer oder niederer Dichte, Polyvinylchlorid, Polystyrol, gehärtetes Polystyrol, Acrylnitril/Butadien/Styrol-Copolymere, Polymethylmethacrylat, Polyamid, Polysulfon oder Polycarbonat ist.

3. Verfahren nach Anspruch 1 oder 2, wobei das Warmverformungsverfahren ein Formverfahren ist.

4. Verfahren nach Anspruch 3, wobei das Formverfahren das Spritzgießverfahren ist.

5. Verfahren nach Anspruch 3 oder 4, wobei die Wärmeaustauschmittel in einer hinter der Oberfläche der Form angeordneten und zur Aufnahme eines Wärmeaustauschfluids geeigneten Leitung bestehen.

6. Verfahren nach irgendeinem der vorhergehenden Ansprüche, wobei die Wärmeaustauschmittel in Stufe 2 zur Anwendung gebracht werden, um die Oberfläche des thermoplastischen Materials auf einer Temperatur im Bereich zwischen $T_u$ und $T_1$ zu halten, bis im wesentlichen das gesamte thermoplastische Material auf eine Temperatur innerhalb des genannten Bereichs abgesenkt ist, und dann allmählich die Oberflächentemperatur zu reduzieren, bis die Gesamtheit des Materials auf eine Temperatur nicht höher als $T_1$ abgesenkt worden ist.

7. Verfahren nach Anspruch 1 oder 2, wobei das Warmverformungsverfahren eine kontinuierliche Extrusion ist und das kontinuierlich extrudierte Produkt durch eine Vielzahl von Bädern geführt wird, um die Reduzierung des Tmperaturgradienten in Stufe 2 zu erreichen.

## Revendications

1. Procédé pour fabriquer un produit thermoplastique façonné, par thermoformage d'une matière thermoplastique et refroidissement de la masse fondue obtenue par thermoformage, par un moyen d'échange de chaleur appliqué sur une surface de cette masse fondue, procédé caractérisé en ce que le refroidissement de la matière thermoplastique comprend les deux étapes successives suivantes:

(1) un refroidissement rapide de la masse thermoplastique fondue jusqu'à ce qu'au moins une surface de cette masse se soit refroidie jusqu'à une température égale ou inférieure à une température critique supérieure $T_s$, cependant que la matière thermoplastique éloignée de la surface est encore à une température supérieure à $T_s$;

(2) le réglage du moyen d'échange de chaleur de manière que le gradient de température entre la matière thermoplastique en surface et la matière éloignée de la surface soit essentiellement réduit jusqu'à ce que la quasi-totalité de la matière thermoplastique soit tombée à une température non supérieure à une température critique inférieure $T_i$, les températures critiques supérieure et inférieure étant déterminées par le méthode VICAT, $T_i$ étant la température laquelle on obtient une pénétration de 0,1 mm et $T_s$ étant la température à laquelle on obtient une pénétration de 1 mm.

2. Procédé selon la revendication 1, dans lequel la matière thermoplastique que l'on utilise est du polyéthylène à densité élevée, moyenne ou basse, du polypropylène du poly(chlorure de vinyle), du polystyène, du polystyrène rendu tenace, des copolymères acrylonitrile/butadiène/-styrène, du poly(méthacrylate de méthyle), du polyamide, de la polysulfone ou du polycarbonate.

3. Procédé selon la revendication 1 ou 2, dans lequel le procéde de thermoformage est un procédé de moulage.

4. Procédé selon la revendication 3, dans lequel le procédé de moulage est du moulage par injection.

5. Procédé selon la revendication 3 ou 4, dans lequel le moyen d'échange de chaleur comprend des conduits situés au-dessous de la surface du moule et destinés à achiminer un fluide d'échange de chaleur.

6. Procédé selon l'une quelconque des revendications précédentes, dans lequel les moyens d'échange de chaleur sont appliqués à la seconde étape en vue de maintenir la surface de la matière thermoplastique à une température comprise entre $T_s$ et $T_i$ jusqu'à ce que la quasi-totalité de la matière thermoplastique soit tombée à une température se situant dans cet intervalle, et afin de réduire ensuite progressivement la température de surface jusqu'à ce que la totalité de la matière soit tombée à une température non supérieure à $T_i$.

7. Procédé selon la revendication 1 ou la revendication 2, dans lequel le procédé de thermoformage est une extrusion continue, et l'on fait passer le produit de l'extrusion continue par plusieurs bains afin d'obtenir dans la seconde étape la diminution de gradient de température.